# EUROPEAN PATENT SPECIFICATION

(11) **EP 4 549 275 B1**
(45) Date of publication and mention of the grant of the patent: **29.04.2026**
(21) Application number: 23741120.2
(22) Date of filing: 13.06.2023
(51) Int. Cl.: B60W 30/16

(54) **CONTROLLER AND CONTROL METHOD**
STEUERGERÄT UND STEUERUNGSVERFAHREN
DISPOSITIF DE RÉGULATION ET PROCÉDÉ DE RÉGULATION

(30) Priority: 30.06.2022 JP 2022106714
(43) Date of publication of application: 07.05.2025
(73) Proprietor: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2023/056079
(87) International publication number: WO 2024/003648

(56) References cited:
- EP-A1- 3 800 099
- EP-A1- 3 842 308
- EP-A1- 3 995 387
- DE-A1- 102020 202 439

## Description

### Technical Field

This invention relates to a control apparatus and a control method capable of appropriately executing speed control based on positional relation information between a leaning vehicle and a target vehicle.

### Background Art

As a related art related to a leaning vehicle such as a motorcycle, there is a technique of supporting driving of a rider. For example, Patent Literature 1 discloses a driver support system that warns, based on information detected by a sensor apparatus that detects an obstacle present in a traveling direction or substantially present in the traveling direction, a rider of a motorcycle about an inappropriate approach to the obstacle. Patent Literature 2 discloses a control apparatus for controlling a posture of an ambient environment detection apparatus that detects an ambient environment of a lean vehicle to assist a rider of the lean vehicle in driving. Patent literature 3 discloses a method for determining a trajectory of a motorcycle, wherein the motorcycle has a driving dynamics sensor for detecting a driving dynamics state of the motorcycle and a control unit for evaluating sensor data of the driving dynamics sensor.

### Citation List

### Patent Literature

PTL 1: JP2009-116882A
PTL 2 : EP-A-3 995 387
PTL 3 : DE 10 2020 202 439 A1

### Summary of Invention

### Technical Problem

As a a technique for supporting driving, there is speed control in which the speed of a leaning vehicle is controlled based on positional relation information between the leaning vehicle and a target vehicle. Examples of such speed control can include adaptive cruise control. In the adaptive cruise control, the speed of the leaning vehicle is controlled so as to ensure a safe distance as an inter-vehicle distance between the leaning vehicle and the target vehicle. The target vehicle is specified, for example, based on a detection result by a surrounding environment sensor mounted to the leaning vehicle.

Herein, a posture of the leaning vehicle easily becomes unstable, in comparison with a posture of an automobile having four wheels. Specifically, the leaning vehicle cannot stand up in a state where the leaning vehicle is being stopped, and easily falls down when the speed of the leaning vehicle becomes low. Therefore, in traveling at the low speed, in order to balance the leaning vehicle, a rider performs an operation of swinging the handle little by little from side to side in some cases. When such a handle operation is performed, for example, appropriately specifying a target vehicle becomes difficult due to a variation in an orientation of the surrounding environment sensor and the like. This makes it difficult to appropriately execute the speed control.

The present invention is made in view of the abovementioned problems, and obtains a control apparatus and a control method capable of appropriately executing speed control based on positional relation information between a leaning vehicle and a target vehicle.

### Solution to Problem

A control apparatus according to the invention is a control apparatus that controls a behavior of a leaning vehicle, the control apparatus including: an executing section that executes speed control in which a speed of the leaning vehicle is controlled based on positional relation information between the leaning vehicle and a target vehicle; and a specifying section that executes specifying processing in which the target vehicle is specified based on a detection result by a surrounding environment sensor mounted to the leaning vehicle, in which the specifying section changes the specifying processing based on speed information on the leaning vehicle.

A control method according to the invention is a control method of controlling a behavior of a leaning vehicle, the control method including: executing speed control in which a speed of the leaning vehicle is controlled based on positional relation information between the leaning vehicle and a target vehicle, by an executing section of a control apparatus; and executing a specifying processing in which the target vehicle is specified based on a detection result by a surrounding environment sensor mounted to the leaning vehicle, by a specifying section of the control apparatus, in which the specifying section changes the specifying processing based on speed information on the leaning vehicle. Advantageous Effects of Invention

In the control apparatus and the control method according to the invention, the executing section of the control apparatus executes speed control in which a speed of the leaning vehicle is controlled based on positional relation information between the leaning vehicle and a target vehicle, the specifying section of the control apparatus executes specifying processing in which the target vehicle is specified based on a detection result by the surrounding environment sensor mounted to the leaning vehicle, and the specifying section changes the specifying processing based on speed information on the leaning vehicle. Accordingly, even in a case where a handle operation in order to balance the leaning vehicle has been performed by a rider, it is possible to appropriately specify the target vehicle. Therefore, it is possible to appropriately execute the speed control based on the positional relation information between the leaning vehicle and the target vehicle.

### Brief Description of Drawings

Fig. 1 is a schematic diagram illustrating a schematic configuration of a leaning vehicle according to an embodiment of the invention.
Fig. 2 is a block diagram illustrating one example of a function configuration of a control apparatus according to the embodiment of the invention.
Fig. 3 is a flowchart illustrating one example of a flow of first processing that is performed by the control apparatus according to the embodiment of the invention.
Fig. 4 is a diagram illustrating a state where a preceding vehicle is positioned outside a detection range of a surrounding environment sensor of the leaning vehicle according to the embodiment of the invention.
Fig. 5 is a flowchart illustrating one example of a flow of second processing that is performed by the control apparatus according to the embodiment of the invention.
Fig. 6 is a diagram illustrating a state where the detection range of the surrounding environment sensor of the leaning vehicle according to the embodiment of the invention is expanded.
Fig. 7 is a flowchart illustrating one example of a flow of third processing that is performed by the control apparatus according to the embodiment of the invention.
Fig. 8 is a diagram illustrating a state where a variation in an expected traveling locus in a vehicle width direction of the leaning vehicle according to the embodiment of the invention is suppressed.

### Description of Embodiments

Hereinafter, an embodiment of a control apparatus and a control method according to the invention will be described with reference to the drawings.

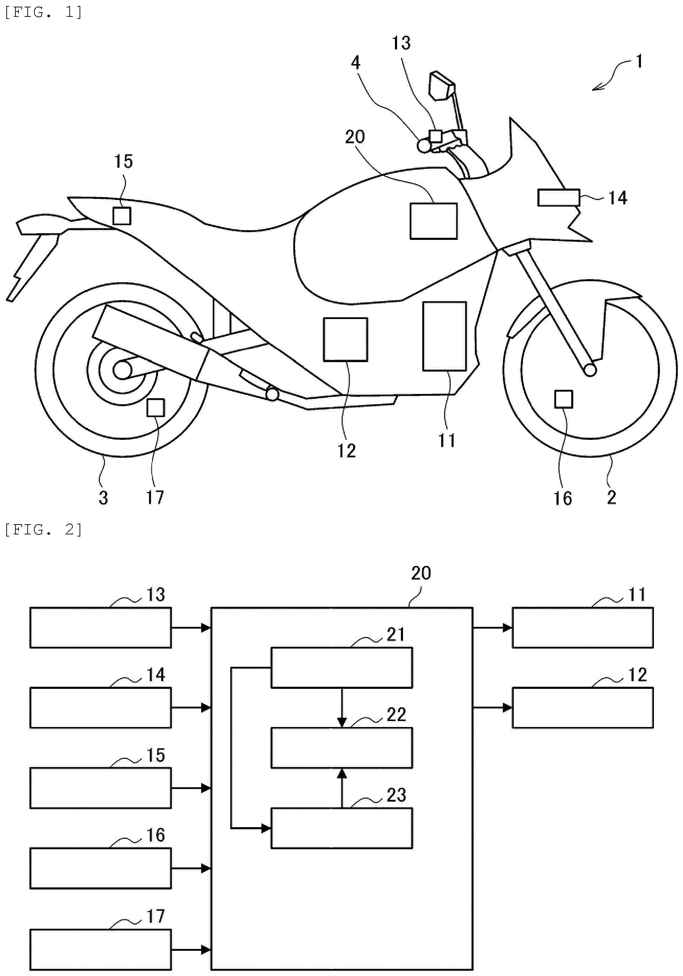

Note that, although a control apparatus that is used in a two-wheeled motorcycle (see a leaning vehicle 1 in Fig. 1) is described in the following, a vehicle serving as a control target of the control apparatus according to the invention only needs to be a leaning vehicle, and may be another leaning vehicle other than the two-wheeled motorcycle. The leaning vehicle indicates a vehicle in which the vehicle body falls on the right side in turning traveling in the right direction, and the vehicle body falls on the left side in turning traveling in the left direction. The leaning vehicle includes, for example, motorcycles (a two-wheeled motor vehicle and a three-wheeled motor vehicle), and a bicycle. The motorcycle includes a vehicle that uses an engine as a power source, a vehicle that uses an electric motor as a power source, and the like. The motorcycle includes, for example, a motorbike, a scooter, and an electric scooter. The bicycle indicates a vehicle capable of traveling on a road by a pedal force of a rider that is applied to a pedal. The bicycle includes an electric assist bicycle, an electric bicycle, and the like.

Moreover, although a case where an engine (specifically, an engine 11 in Fig. 1, which is described later) is mounted as a drive source capable of outputting power for driving wheels is described in the following, another drive source (for example, an electric motor) other than the engine may be mounted as a drive source, or a plurality of drive sources may be mounted.

Moreover, the configuration, the operation, and the like to be described in the following are examples, and a control apparatus and a control method according to the invention are not limited to the case having such the configuration, the operation, and the like.

Moreover, the same or similar descriptions are simplified or omitted as appropriate in the following. Moreover, in the respective drawings, as for the same or similar members or portions, assigning reference numerals thereto is omitted, or the same reference numerals are assigned thereto. Moreover, detailed structures are simplified or omitted as appropriate.

### <Configuration of Leaning Vehicle>

With reference to Figs. 1 and 2, a configuration of the leaning vehicle 1 according to an embodiment of the invention will be described.

Fig. 1 is a schematic diagram illustrating a schematic configuration of the leaning vehicle 1. Fig. 2 is a block diagram illustrating one example of a function configuration of a control apparatus 20.

The leaning vehicle 1 is a two-wheeled motorcycle corresponding to one example of a leaning vehicle according to the invention. As illustrated in Fig. 1, the leaning vehicle 1 is provided with a front wheel 2, a rear wheel 3, a handle 4, the engine 11, a hydraulic pressure control unit 12, an input apparatus 13, a surrounding environment sensor 14, an inertial measurement apparatus (IMU) 15, a front-wheel wheel speed sensor 16, a rear-wheel wheel speed sensor 17, and the control apparatus (ECU) 20.

The engine 11 corresponds to one example of a drive source of the leaning vehicle 1, and is capable of outputting power for driving a wheel. For example, the engine 11 is provided with one or a plurality of cylinders in which a combustion chamber is formed in an inside thereof, a fuel injection valve that injects fuel toward the combustion chamber, and an ignition plug. The fuel is injected from the fuel injection valve to form an air-fuel mixture containing air and fuel in the combustion chamber, and the air-fuel mixture is ignited by the ignition plug and burns. Accordingly, a piston provided in the cylinder reciprocates, and a crankshaft rotates. Moreover, a throttle valve is provided in an air-intake pipe of the engine 11 to change the air-intake quantity to the combustion chamber in accordance with the throttle opening degree that is the opening degree of the throttle valve.

The hydraulic pressure control unit 12 is a unit that has a function to control a braking force that is generated in the wheel. For example, the hydraulic pressure control unit 12 is provided on an oil passage that connects a master cylinder to a wheel cylinder, and includes components (for example, a control valve and a pump) for controlling a braking hydraulic pressure of the wheel cylinder. The operation of the components in the hydraulic pressure control unit 12 is controlled to control a braking force to be generated in the wheel. Note that, the hydraulic pressure control unit 12 may respectively control braking forces to be generated in both of the front wheel 2 and the rear wheel 3, or may control the braking force to be generated in only one of the front wheel 2 and the rear wheel 3.

The input apparatus 13 receives various kinds of operations by a rider. The input apparatus 13 is provided to the handle 4, for example, and includes a push button and the like that are used in the operation by the rider. Information related to the operation by the rider using the input apparatus 13 is output to the control apparatus 20.

The surrounding environment sensor 14 detects surrounding environment information related to an environment in the surrounding of the leaning vehicle 1. For example, the surrounding environment sensor 14 is provided to a front part of the leaning vehicle 1, and detects surrounding environment information in front of the leaning vehicle 1. The surrounding environment information detected by the surrounding environment sensor 14 is output to the control apparatus 20.

The surrounding environment information that is detected by the surrounding environment sensor 14 may be information (for example, a relative position, a relative distance, a relative speed, or a relative acceleration) related to a distance to or an orientation of a subject that is positioned in the periphery of the leaning vehicle 1, or may be a feature (for example, a type of the subject, a shape of the subject itself, or a mark assigned to the subject) of the subject that is positioned in the periphery of the leaning vehicle 1. The surrounding environment sensor 14 may be, for example, a radar, a Lidar sensor, an ultrasonic sensor, or a camera.

The inertial measurement apparatus 15 is provided with a three-axis gyro sensor and a three-way acceleration sensor, and detects a posture of the leaning vehicle 1. The inertial measurement apparatus 15 is provided to the body of the leaning vehicle 1, for example. For example, the inertial measurement apparatus 15 detects a lean angle of the leaning vehicle 1, and outputs a detection result. The inertial measurement apparatus 15 may detect another physical amount that can be substantially converted into the lean angle of the leaning vehicle 1. The lean angle corresponds to an angle indicating an inclination of the vehicle body (specifically, body) of the leaning vehicle 1 in the roll direction with respect to the vertical upward direction. The inertial measurement apparatus 15 may be provided with parts of the three-axis gyro sensor and the three-way acceleration sensor.

The front-wheel wheel speed sensor 16 is a wheel speed sensor that detects a wheel speed of the front wheel 2 (for example, a rotational frequency [rpm] per unit time or a movement distance [km/h] per unit time, and the like of the front wheel 2), and outputs a detection result. The front-wheel wheel speed sensor 16 may detect another physical amount that can be substantially converted into the wheel speed of the front wheel 2. The front-wheel wheel speed sensor 16 is provided to the front wheel 2.

The rear-wheel wheel speed sensor 17 is a wheel speed sensor that detects a wheel speed of the rear wheel 3 (for example, a rotational frequency [rpm] per unit time or a movement distance [km/h] per unit time, and the like of the rear wheel 3), and outputs a detection result. The rear-wheel wheel speed sensor 17 may detect another physical amount that can be substantially converted into the wheel speed of the rear wheel 3. The rear-wheel wheel speed sensor 17 is provided to the rear wheel 3.

The control apparatus 20 controls a behavior of the leaning vehicle 1. For example, a part or all of the control apparatus 20 includes a microcomputer, a microprocessor unit, and the like. Moreover, for example, a part or all of the control apparatus 20 may include an updatable component such as firmware, and may be a program module or the like that is executed by a command from a CPU or the like. The control apparatus 20 may be one control apparatus 20 or may be divided into a plurality of the control apparatuses 20, for example.

As illustrated in Fig. 2, the control apparatus 20 is provided with, for example, an acquiring section 21, an executing section 22, and a specifying section 23. Moreover, the control apparatus 20 communicates with the respective apparatuses of the leaning vehicle 1.

The acquiring section 21 acquires information from the respective apparatuses of the leaning vehicle 1, and outputs the information to the executing section 22 and the specifying section 23. For example, the acquiring section 21 acquires information from the input apparatus 13, the surrounding environment sensor 14, the inertial measurement apparatus 15, the front-wheel wheel speed sensor 16, and the rear-wheel wheel speed sensor 17. Note that, in the present description, the acquisition of information can include extraction, creation, and the like of the information.

The executing section 22 executes various kinds of control by controlling operations of the respective apparatuses of the leaning vehicle 1. The executing section 22 controls operations of the engine 11 and the hydraulic pressure control unit 12, for example. Herein, the executing section 22 can execute the adaptive cruise control as speed control based on positional relation information between the leaning vehicle 1 and a target vehicle. Note that, the abovementioned positional relation information can include, for example, information on a relative position, a relative distance, a relative speed, a relative acceleration, a relative jerk, a passage time difference, and the like of the leaning vehicle 1 with respect to the target vehicle. The abovementioned positional relation information may be information on another physical amount that can be substantially converted into the information on these.

Hereinafter, an example in which the adaptive cruise control is executed as speed control based on positional relation information between the leaning vehicle 1 and the target vehicle will be described. Further, the speed control only needs to be control based on positional relation information between the leaning vehicle 1 and the target vehicle, and may be control other than the adaptive cruise control.

The executing section 22 executes the adaptive cruise control in response to an operation by the rider using the input apparatus 13, for example. In the adaptive cruise control, the executing section 22 automatically controls the speed of the leaning vehicle 1, independent of an acceleration-deceleration operation (in other words, an accelerator operation and a brake operation) by the rider. The executing section 22 can control the speed of the leaning vehicle 1, based on information on the speed of the leaning vehicle 1 that is acquired based on the wheel speed of the front wheel 2 and the wheel speed of the rear wheel 3, for example.

In the adaptive cruise control, the executing section 22 performs inter-vehicle distance maintenance control that maintains an inter-vehicle distance between the leaning vehicle 1 and a target vehicle to a target distance. The executing section 22 performs the inter-vehicle distance maintenance control based on surrounding environment information that is detected by the surrounding environment sensor 14. The surrounding environment sensor 14 can detect an inter-vehicle distance between a preceding vehicle that travels in front of the leaning vehicle 1 and the leaning vehicle 1, and a relative speed of the leaning vehicle 1 with respect to the preceding vehicle. The executing section 22 sets the preceding vehicle as a target vehicle in the inter-vehicle distance maintenance control, for example, and controls the speed of the leaning vehicle 1 such that the inter-vehicle distance with respect to the preceding vehicle is maintained to the target distance. Note that, the inter-vehicle distance may indicate a distance in a direction along a lane (specifically, a traveling lane of the leaning vehicle 1), or may indicate a straight-line distance.

The specifying section 23 executes specifying processing in which a target vehicle is specified based on a detection result by the surrounding environment sensor 14 mounted to the leaning vehicle 1. A detection range of the surrounding environment sensor 14 spreads in front of the front part of the leaning vehicle 1. The surrounding environment sensor 14 can detect surrounding environment information within the detection range. The specifying section 23 can specify a vehicle that is present within the detection range of the surrounding environment sensor 14 as a target vehicle, in the specifying processing. Based on the target vehicle specified in the specifying processing, the adaptive cruise control by the executing section 22 is executed.

Herein, the surrounding environment sensor 14 rotates integrally with the handle 4 of the leaning vehicle 1. When the leaning vehicle 1 travels at the low speed, the rider performs an operation of swinging the handle 4 little by little from side to side in order to balance the leaning vehicle 1 in some cases. When such a handle operation is performed, the orientation of the surrounding environment sensor 14 varies in synchronization with the handle 4, and the detection range of the surrounding environment sensor 14 is swung from side to side. This makes it difficult to appropriately specify a target vehicle, so that appropriately executing the speed control becomes difficult. In the present embodiment, as is described later, the specifying processing of a target vehicle is devised, so that appropriately specifying a target vehicle and appropriately executing the speed control are implemented.

### <Operation of Control Apparatus>

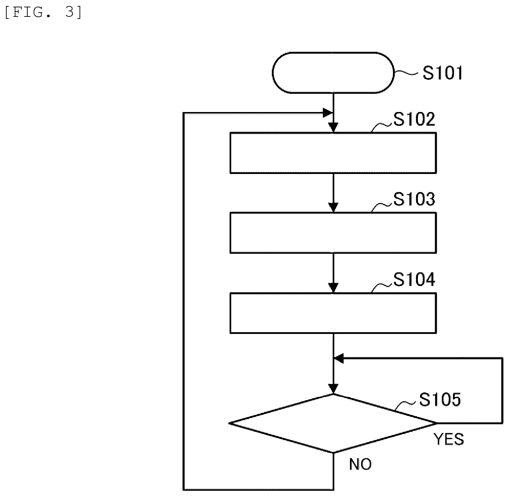

With reference to Figs. 3 to 8, an operation of the control apparatus 20 according to the embodiment of the invention will be described.

As mentioned above, the specifying section 23 of the control apparatus 20 executes the specifying processing in which a target vehicle is specified. Hereinafter, as a processing example related to the specifying processing that is performed by the control apparatus 20 (specifically, the specifying section 23), first processing, second processing, and third processing will be described sequentially.

Note that, hereinafter, low-speed traveling in which the leaning vehicle 1 travels at a speed lower than a reference speed is also simply referred to as low-speed traveling. The reference speed is, for example, a low speed to the extent that the rider needs to perform an operation of swinging the handle 4 little by little from side to side in order to balance the leaning vehicle 1.

Fig. 3 is a flowchart illustrating one example of a flow of the first processing that is performed by the control apparatus 20. Step S101 in Fig. 3 corresponds to a start of a control flow illustrated in Fig. 3.

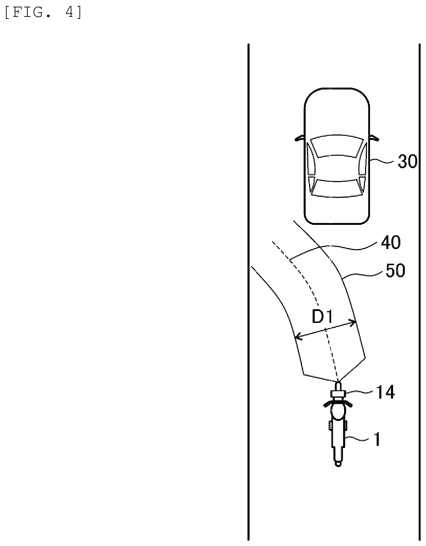

When the control flow illustrated in Fig. 3 is started, at Step S102, the specifying section 23 determines an expected traveling locus (see an expected traveling locus 40, which is described later, in Fig. 4) of the leaning vehicle 1.

The expected traveling locus that is determined at Step S102 is a locus through which the leaning vehicle 1 is expected to pass in the future. At Step S102, the specifying section 23 determines an expected traveling locus, based on a lean angle of the leaning vehicle 1 and an operating steering angle of the handle 4, for example.

Next to Step S102, at Step S103, the specifying section 23 determines a detection range (see a detection range 50, which is described later, in Fig. 4) of the surrounding environment sensor 14 that is used in the specifying processing.

The detection range that is determined at Step S103 is a detection range effective in the specifying processing, in an entire detection range detectable by the surrounding environment sensor 14. At Step S103, the specifying section 23 determines a detection range of the surrounding environment sensor 14 that is used in the specifying processing, based on the expected traveling locus of the leaning vehicle 1. For example, the specifying section 23 determines a range having a predetermined width (see a first width D1, which is described later, in Fig. 4) in which the expected traveling locus is in the center, as a detection range of the surrounding environment sensor 14 that is used in the specifying processing.

Next to Step S103, at Step S104, the specifying section 23 specifies a vehicle detected by the surrounding environment sensor 14, as a target vehicle. Specifically, the specifying section 23 specifies a vehicle that is present within the detection range determined at Step S103, as a target vehicle.

Next to Step S104, at Step S105, the specifying section 23 determines whether speed information on the leaning vehicle 1 is information indicating that the leaning vehicle 1 performs the low-speed traveling or information indicating that the leaning vehicle 1 is in a change process to the low-speed traveling.

The abovementioned speed information is information related to the speed of the leaning vehicle 1, and various kinds of information can be used as the abovementioned speed information.

For example, the speed information is information indicating the speed of the leaning vehicle 1. The information indicating the speed of the leaning vehicle 1 can be acquired based on an output result by the front-wheel wheel speed sensor 16 and an output result by the rear-wheel wheel speed sensor 17, for example. For example, if the speed of the leaning vehicle 1 is lower than the reference speed, the specifying section 23 determines that the speed information is information indicating that the leaning vehicle 1 performs the low-speed traveling. Moreover, for example, if the speed of the leaning vehicle 1 gradually decreases and is expected to become lower than the reference speed, the specifying section 23 determines that the speed information is information indicating that the leaning vehicle 1 is in a change process to the low-speed traveling.

Moreover, for example, the speed information is information indicating the deceleration of the leaning vehicle 1. The information indicating the deceleration of the leaning vehicle 1 can be acquired based on a transition in the speed of the leaning vehicle 1. For example, if the speed of the leaning vehicle 1 is higher than the reference speed but the leaning vehicle 1 decelerates and the deceleration of the leaning vehicle 1 is larger than a reference deceleration, the specifying section 23 determines that the speed information is information indicating that the leaning vehicle 1 is in a change process to the low-speed traveling.

Moreover, for example, the speed information is information related to a brake operation by a rider of the leaning vehicle 1. Examples of the information related to the brake operation can include information indicating the operation amount of the brake operation, information indicating a master cylinder pressure, or the like. For example, if the speed of the leaning vehicle 1 is higher than the reference speed but the brake operation is performed, and the operation amount of the brake operation is larger than a reference operation amount or the master cylinder pressure is higher than a reference pressure, the specifying section 23 determines that the speed information is information indicating that the leaning vehicle 1 is in a change process to the low-speed traveling.

At Step S105, if it has been determined that the speed information is not information indicating that the leaning vehicle 1 performs the low-speed traveling or indicating that the leaning vehicle 1 is in a change process to the low-speed traveling (Step S105/NO), the processing returns to Step S102. On the other hand, at Step S105, if it has been determined that the speed information is information indicating that the leaning vehicle 1 performs the low-speed traveling or information indicating that the leaning vehicle 1 is in a change process to the low-speed traveling (Step S105/YES), Step S105 is repeated.

During when it is continuously determined as YES at Step S105, Step S105 is repeated, and the processing from Step S102 to S104 is thus not performed. In other words, if the leaning vehicle 1 performs the low-speed traveling or the leaning vehicle 1 is in a change process to the low-speed traveling, changing the target vehicle is forbidden.

Fig. 4 is a diagram illustrating a state where a preceding vehicle 30 is positioned outside the detection range 50 of the surrounding environment sensor 14 of the leaning vehicle 1. In the example of Fig. 4, in the same lane, the leaning vehicle 1 and the preceding vehicle 30 travel in line in the front-back direction. The preceding vehicle 30 is positioned in front of the leaning vehicle 1. In the example of Fig. 4, the preceding vehicle 30 is a four-wheeled automobile. Further, the preceding vehicle 30 may be a vehicle (for example, a straddle-type vehicle) other than the four-wheeled automobile.

In the example of Fig. 4, when the leaning vehicle 1 starts the low-speed traveling, the handle 4 is swung to the left side resulting from a handle operation in order to balance the leaning vehicle 1 performed by the rider. Accordingly, a locus that curves to the left is determined as the expected traveling locus 40. Further, a range having the first width D1 in which the expected traveling locus is in the center is determined as the detection range 50 of the surrounding environment sensor 14 that is used in the specifying processing. As a result, the preceding vehicle 30 is positioned outside the detection range 50 of the surrounding environment sensor 14.

Before the leaning vehicle 1 starts the low-speed traveling, the preceding vehicle 30 is present within the detection range 50 of the surrounding environment sensor 14, and the preceding vehicle 30 has been specified as a target vehicle. In such a situation, in the abovementioned first processing, when the leaning vehicle 1 starts the low-speed traveling, changing the target vehicle is forbidden, so that as illustrated in Fig. 4, even in a case where the preceding vehicle 30 has deviated from the detection range 50, the preceding vehicle 30 is maintained as a target vehicle.

As in the foregoing, in the first processing described with reference to Figs. 3 and 4, the specifying section 23 determines the propriety of changing the target vehicle in accordance with the speed information. Specifically, if the speed information is information indicating that the leaning vehicle 1 performs the low-speed traveling or information indicating that the leaning vehicle 1 is in a change process to the low-speed traveling, the specifying section 23 forbids changing the target vehicle. Accordingly, in a case where the target vehicle has deviated from the detection range 50 of the surrounding environment sensor 14 with the handle operation in order to balance the leaning vehicle 1 performed by the rider, losing sight of the target vehicle is suppressed. Therefore, it is possible to appropriately specify the target vehicle, and appropriately execute the speed control.

Further, in a case where the propriety of changing the target vehicle is determined in accordance with the speed information, the specifying section 23 may perform processing different from the first processing described above. For example, in a case where a forbidden condition of changing the target vehicle based on information other than the speed information is present, if the speed information is information indicating that the leaning vehicle 1 performs the low-speed traveling or information indicating that the leaning vehicle 1 is in a change process to the low-speed traveling, the specifying section 23 may set the abovementioned forbidden condition to a condition under which changing the target vehicle is forbidden easier than if the speed information is not information indicating that the leaning vehicle 1 performs the low-speed traveling or indicating that the leaning vehicle 1 is in a change process to the low-speed traveling.

Moreover, in the first processing described above, after changing the target vehicle has been forbidden, if it has been determined that the speed information is not information indicating that the leaning vehicle 1 performs the low-speed traveling or indicating that the leaning vehicle 1 is in a change process to the low-speed traveling, a function to forbid changing the target vehicle is canceled. Further, a cancel condition of canceling the function to forbid changing the target vehicle may be a cancel condition other than the abovementioned example. For example, as a cancel condition of the function to forbid changing the target vehicle, a condition in which a specific operation using the input apparatus 13 or the like has been performed by the rider may be used. Moreover, for example, as a cancel condition of the function to forbid changing the target vehicle, a condition in which it has been determined that the leaning vehicle 1 performs curve traveling may be used. The specifying section 23 can determine whether the leaning vehicle 1 performs the curve traveling based on a lean angle of the leaning vehicle 1, the degree of change in the lean angle, or a yaw rate of the leaning vehicle 1, for example.

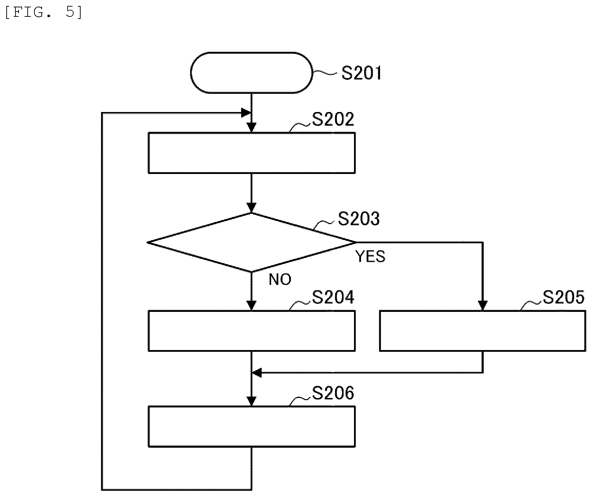

Fig. 5 is a flowchart illustrating one example of a flow of second processing that is performed by the control apparatus 20. Step S201 in Fig. 5 corresponds to a start of a control flow illustrated in Fig. 5.

When the control flow illustrated in Fig. 5 is started, at Step S202, the specifying section 23 determines the expected traveling locus 40 of the leaning vehicle 1. The processing at Step S202 is similar to the processing at Step S102 in Fig. 3.

Next to Step S202, at Step S203, the specifying section 23 determines whether the speed information on the leaning vehicle 1 is information indicating that the leaning vehicle 1 performs the low-speed traveling or information indicating that the leaning vehicle 1 is in a change process to the low-speed traveling. The processing at Step S203 is similar to the processing at Step S105 in Fig. 3.

At Step S203, if it has been determined that the speed information is not information indicating that the leaning vehicle 1 performs the low-speed traveling or indicating that the leaning vehicle 1 is in a change process to the low-speed traveling (Step S203/NO), the processing proceeds to Step S204. At Step S204, the specifying section 23 sets a width of the detection range 50 of the surrounding environment sensor 14 that is used in the specifying processing to the first width D1 to determine the detection range 50. Specifically, the specifying section 23 determines a range having the first width D1 in which the expected traveling locus 40 is in the center, as the detection range 50.

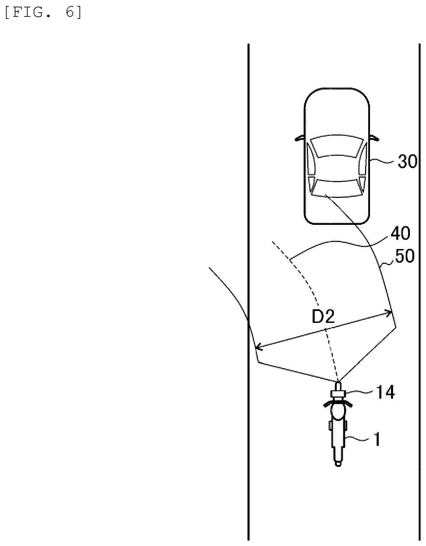

On the other hand, at Step S203, if it has been determined that the speed information is information indicating that the leaning vehicle 1 performs the low-speed traveling or information indicating that the leaning vehicle 1 is in a change process to the low-speed traveling (Step S203/YES), the processing proceeds to Step S205. At Step S205, the specifying section 23 sets a width of the detection range 50 of the surrounding environment sensor 14 that is used in the specifying processing to a second width (see a second width D2, which is described later, in Fig. 6) to determine the detection range 50. The second width D2 is wider than the first width D1. Specifically, the specifying section 23 determines a range having the second width D2 in which the expected traveling locus 40 is in the center, as the detection range 50.

Fig. 6 is a diagram illustrating a state where the detection range 50 of the surrounding environment sensor 14 of the leaning vehicle 1 is expanded. In the example of Fig. 6, similar to the example of Fig. 4, in the same lane, the preceding vehicle 30 travels in front of the leaning vehicle 1. In the example of Fig. 4, when the leaning vehicle 1 has started the low-speed traveling, the preceding vehicle 30 has deviated from the detection range 50. Meanwhile, in the abovementioned second processing, when the leaning vehicle 1 has started the low-speed traveling, as illustrated in Fig. 6, the detection range 50 is expanded. As a result, while the preceding vehicle 30 does not deviate from the detection range 50, the situation where the preceding vehicle 30 is positioned within the detection range 50 is maintained.

Note that, in the example of Fig. 6, in a case where the detection range 50 is expanded, the specifying section 23 symmetrically expands the detection range 50 to both sides in which the expected traveling locus 40 is in the center. Further, in a case where the detection range 50 is expanded, the specifying section 23 may expand only one side of the detection range 50 using the expected traveling locus 40 as a reference. For example, the specifying section 23 may expand the detection range 50 only in a reverse direction (right direction in the example of Fig. 6) of a direction (left direction in the example of Fig. 6) toward which the expected traveling locus 40 curves with respect to the body of the leaning vehicle 1.

Next to Step S204 or Step S205 in Fig. 5, at Step S206, the specifying section 23 specifies the vehicle detected by the surrounding environment sensor 14 as a target vehicle, and the processing returns to Step S202. The processing at Step S206 is similar to the processing at Step S104 in Fig. 3.

As in the foregoing, in the second processing described with reference to Figs. 5 and 6, the specifying section 23 changes the detection range 50 of the surrounding environment sensor 14 that is used in the specifying processing, based on the speed information. Specifically, if the speed information is information indicating that the leaning vehicle 1 performs low-speed traveling in which the leaning vehicle 1 travels at a speed lower than a reference speed or information indicating that the leaning vehicle 1 is in a change process to the low-speed traveling, the specifying section 23 expands the detection range 50 more than if the speed information is not information indicating that the leaning vehicle 1 performs the low-speed traveling or indicating that the leaning vehicle 1 is in a change process to the low-speed traveling. Accordingly, even in a case where the handle operation in order to balance the leaning vehicle 1 has been performed by the rider, the situation where the target vehicle is positioned within the detection range 50 while the target vehicle does not deviate from the detection range 50 is maintained. Therefore, it is possible to appropriately specify the target vehicle, and appropriately execute the speed control.

Further, in a case where the detection range 50 of the surrounding environment sensor 14 is changed based on the speed information, the specifying section 23 may perform processing different from the second processing described above. For example, the specifying section 23 may gradually expand the detection range 50 of the surrounding environment sensor 14 as the speed of the leaning vehicle 1 decreases. Moreover, for example, the specifying section 23 may change a shape, an extending direction, or a relative position with respect to the leaning vehicle 1, of the detection range 50 of the surrounding environment sensor 14, based on the speed information.

Moreover, in the second processing described above, after the detection range 50 has been expanded, if it has been determined that the speed information is not information indicating that the leaning vehicle 1 performs the low-speed traveling or indicating that the leaning vehicle 1 is in a change process to the low-speed traveling, the function to expand the detection range 50 is canceled. Further, a cancel condition of a function to expand the detection range 50 may be a cancel condition other than the abovementioned example. For example, as a cancel condition of the function to cancel the detection range 50, similar to the cancel condition of the function to forbid changing the target vehicle, a condition in which a specific operation using the input apparatus 13 or the like has been performed by the rider, or a condition in which it has been determined that the leaning vehicle 1 performs the curve traveling may be used.

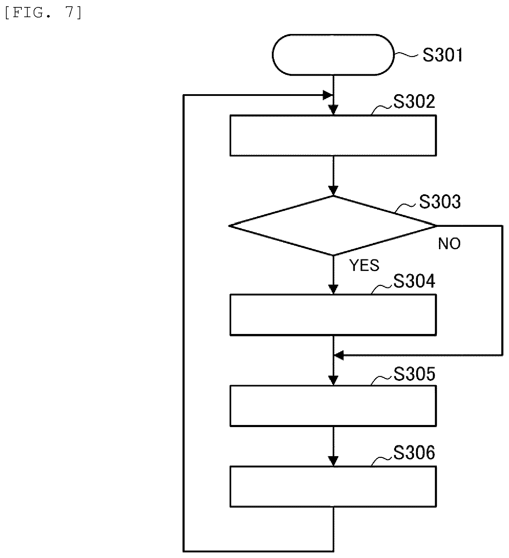

Fig. 7 is a flowchart illustrating one example of a flow of third processing that is performed by the control apparatus 20. Step S301 in Fig. 7 corresponds to a start of a control flow illustrated in Fig. 7.

When the control flow illustrated in Fig. 7 is started, at Step S302, the specifying section 23 determines the expected traveling locus 40 of the leaning vehicle 1. The processing at Step S302 is similar to the processing at Step S102 in Fig. 3.

Next to Step S302, at Step S303, the specifying section 23 determines whether the speed information on the leaning vehicle 1 is information indicating that the leaning vehicle 1 performs the low-speed traveling or information indicating that the leaning vehicle 1 is in a change process to the low-speed traveling. The processing at Step S303 is similar to the processing at Step S105 in Fig. 3.

At Step S303, it has been determined that the speed information is information indicating that the leaning vehicle 1 performs the low-speed traveling or information indicating that the leaning vehicle 1 is in a change process to the low-speed traveling (Step S303/YES), the processing proceeds to Step S304. On the other hand, at Step S303, if it has been determined that the speed information is not information indicating that the leaning vehicle 1 performs the low-speed traveling or indicating that the leaning vehicle 1 is in a change process to the low-speed traveling (Step S303/NO), Step S304 is not performed, the processing proceeds to Step S305.

At Step S304, the specifying section 23 executes variation suppressing processing that suppresses a variation in the expected traveling locus 40 in the vehicle width direction of the leaning vehicle 1.

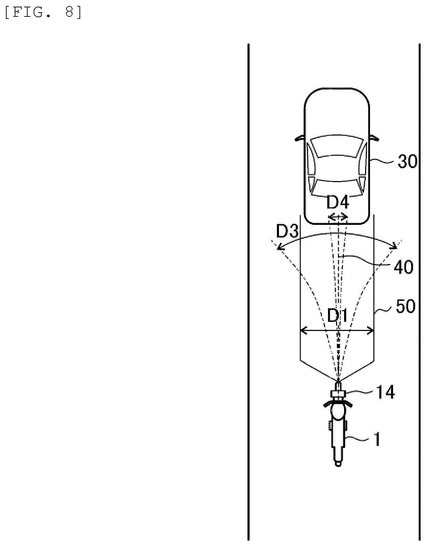

The handle operation in order to balance the leaning vehicle 1 that is performed by the rider is an operation of swinging the handle 4 little by little from side to side as mentioned above. Therefore, in a case where such a handle operation is performed, the expected traveling locus 40 determined at Step S302 varies in the vehicle width direction of the leaning vehicle 1. Specifically, a direction toward which the expected traveling locus 40 curves is swung from side to side within a variation width (for example, a width D3, which is described later, in Fig. 8) in the vehicle width direction.

For example, in the variation suppressing processing, the specifying section 23 subjects data indicating the transition in the expected traveling locus 40 to filter processing using a low-path filter to adjust the expected traveling locus 40 such that the variation width of the expected traveling locus 40 in the vehicle width direction becomes smaller than that when the variation suppressing processing is not executed. Moreover, for example, the specifying section 23 adjusts the expected traveling locus 40 such that the variation width of the expected traveling locus 40 in the vehicle width direction becomes equal to or less than the upper limit.

Fig. 8 is a diagram illustrating a state where a variation in the expected traveling locus 40 in the vehicle width direction of the leaning vehicle 1 is suppressed. In the example of Fig. 8, similar to the example of Fig. 4, in the same lane, the preceding vehicle 30 travels in front of the leaning vehicle 1. In the example of Fig. 4, when the leaning vehicle 1 has started the low-speed traveling, the preceding vehicle 30 has deviated from the detection range 50. Meanwhile, in the abovementioned third processing, when the leaning vehicle 1 has started the low-speed traveling, the variation suppressing processing is performed. Accordingly, for example, as illustrated in Fig. 8, the variation width of the expected traveling locus 40 in the vehicle width direction changes from the width D3 to a width D4. The width D4 after the change is smaller than the width D3 at when the variation suppressing processing is not executed. In this manner, the variation in the expected traveling locus 40 in the vehicle width direction is suppressed by the variation suppressing processing, so that the swing of the detection range 50 from side to side in synchronization with the handle 4 is suppressed. As a result, while the preceding vehicle 30 does not deviate from the detection range 50, the situation where the preceding vehicle 30 is positioned within the detection range 50 is maintained.

Next to Step S304 in Fig. 7 or if it has been determined as NO at Step S303, at Step S305, the specifying section 23 determines the detection range 50 of the surrounding environment sensor 14 that is used in the specifying processing. The processing at Step S305 is similar to the processing at Step S103 in Fig. 3.

Next to Step S305, at Step S306, the specifying section 23 specifies a vehicle detected by the surrounding environment sensor 14, as a target vehicle, and the processing returns to Step S302. The processing at Step S306 is similar to the processing at Step S104 in Fig. 3.

As in the foregoing, in the third processing described with reference to Figs. 7 and 8, the specifying section 23 changes the expected traveling locus 40 based on the speed information. Specifically, if the speed information is information indicating that the leaning vehicle 1 performs low-speed traveling in which the leaning vehicle 1 travels at a speed lower than a reference speed or information indicating that the leaning vehicle 1 is in a change process to the low-speed traveling, the specifying section 23 suppresses the variation in the expected traveling locus 40 in the vehicle width direction of the leaning vehicle 1. Accordingly, even in a case where the handle operation in order to balance the leaning vehicle 1 has been performed by the rider, the situation where the target vehicle is positioned within the detection range 50 while the target vehicle does not deviate from the detection range 50 is maintained. Therefore, it is possible to appropriately specify the target vehicle, and appropriately execute the speed control.

Further, in a case where the expected traveling locus 40 is changed based on the speed information, the specifying section 23 may perform processing different from the third processing described above. For example, the specifying section 23 may execute the variation suppressing processing such that a suppression effect gradually increases as the speed of the leaning vehicle 1 becomes lower.

Moreover, in the third processing described above, after the variation in the expected traveling locus 40 has been suppressed, if it has been determined that the speed information is not information indicating that the leaning vehicle 1 performs the low-speed traveling or indicating that the leaning vehicle 1 is in a change process to the low-speed traveling, a function to suppress the variation in the expected traveling locus 40 is canceled. Further, a cancel condition of the function to suppress the variation in the expected traveling locus 40 may be a cancel condition other than the abovementioned example. For example, as a cancel condition of the function to suppress the variation in the expected traveling locus 40, similar to the cancel condition of the function to forbid changing the target vehicle, a condition in which a specific operation of using the input apparatus 13 or the like has been performed by the rider, or a condition in which it has been determined that the leaning vehicle 1 performs the curve traveling may be used.

In the foregoing, as the examples related to the specifying processing that is performed by the specifying section 23, the first processing, the second processing, and the third processing have been described. The processing can be executed in various kinds of situations. For example, in a situation where a group that is configured of a plurality of vehicles including the leaning vehicle 1 perform group traveling, the specifying section 23 may execute the abovementioned each processing. In the group traveling, the group that is configured of a plurality of vehicles including the leaning vehicle 1 travel in a plurality of vehicle trains (specifically, two vehicle trains of a vehicle train on the left side and a vehicle train on the right side in the same lane) .

### <Effect of Control Apparatus>

Effects of the control apparatus 20 according to the embodiment of the invention will be described.

The control apparatus 20 is provided with: the executing section 22 that executes speed control (adaptive cruise control in the abovementioned example) in which a speed of the leaning vehicle 1 is controlled based on positional relation information between the leaning vehicle 1 and a target vehicle; and the specifying section 23 that executes specifying processing in which the target vehicle is specified based on a detection result by the surrounding environment sensor 14 mounted to the leaning vehicle 1. Further, the specifying section 23 changes the specifying processing based on speed information on the leaning vehicle 1. Accordingly, even in a case where a handle operation in order to balance the leaning vehicle 1 has been performed by a rider, it is possible to appropriately specify the target vehicle. Therefore, it is possible to appropriately execute the speed control based on the positional relation information between the leaning vehicle 1 and the target vehicle.

Preferably, in the control apparatus 20, the surrounding environment sensor 14 rotates integrally with the handle 4 of the leaning vehicle 1. In this case, when the handle operation in order to balance the leaning vehicle 1 is performed by the rider, the orientation of the surrounding environment sensor 14 varies in synchronization with the handle 4, and the detection range 50 of the surrounding environment sensor 14 is swung from side to side. Accordingly, appropriately specifying the target vehicle is likely to be difficult. Therefore, it becomes especially important to appropriately specify the target vehicle by changing the specifying processing based on the speed information.

Further, the surrounding environment sensor 14 does not need to rotate integrally with the handle 4 of the leaning vehicle 1. Even in such a case, the detection result by the surrounding environment sensor 14 can vary resulting from the handle operation in order to balance the leaning vehicle 1 performed by the rider. Therefore, by changing the specifying processing based on the speed information, effects of appropriately specifying the target vehicle and appropriately executing the speed control are exhibited.

Preferably, in the control apparatus 20, the specifying section 23 determines the propriety of changing the target vehicle in accordance with the speed information. Accordingly, as in the abovementioned first processing, in a case where the target vehicle deviates from the detection range 50 of the surrounding environment sensor 14 resulting from the handle operation in order to balance the leaning vehicle 1 performed by the rider, losing sight of the target vehicle is suppressed. Therefore, it is possible to appropriately specify the target vehicle, and appropriately execute the speed control.

Preferably, in the control apparatus 20, if the speed information is information indicating that the leaning vehicle 1 performs low-speed traveling in which the leaning vehicle 1 travels at a speed lower than a reference speed or information indicating that the leaning vehicle 1 is in a change process to the low-speed traveling, the specifying section 23 forbids changing the target vehicle. Accordingly, as in the abovementioned first processing, in a case where the target vehicle deviates from the detection range 50 of the surrounding environment sensor 14 resulting from the handle operation in order to balance the leaning vehicle 1 performed by the rider, suppressing losing sight of the target vehicle is appropriately implemented. Therefore, appropriately specifying the target vehicle and appropriately executing the speed control are appropriately implemented.

Preferably, in the control apparatus 20, the specifying section 23 changes the detection range 50 of the surrounding environment sensor 14 that is used in the specifying processing, based on the speed information. Accordingly, as in the abovementioned second processing, even in a case where the handle operation in order to balance the leaning vehicle 1 has been performed by the rider, the situation where the target vehicle is positioned within the detection range 50 while the target vehicle does not deviate from the detection range 50 is maintained. Therefore, it is possible to appropriately specify the target vehicle, and appropriately execute the speed control.

Preferably, in the control apparatus 20, if the speed information is information indicating that the leaning vehicle 1 performs low-speed traveling in which the leaning vehicle 1 travels at a speed lower than a reference speed or information indicating that the leaning vehicle 1 is in a change process to the low-speed traveling, the specifying section 23 expands the detection range 50 more than if the speed information is not information indicating that the leaning vehicle 1 performs the low-speed traveling or indicating that the leaning vehicle 1 is in a change process to the low-speed traveling. Accordingly, as in the abovementioned second processing, even in a case where the handle operation in order to balance the leaning vehicle 1 has been performed by the rider, maintaining the situation where the target vehicle is positioned within the detection range 50 while the target vehicle does not deviate from the detection range 50 is appropriately implemented. Therefore, appropriately specifying the target vehicle and appropriately executing the speed control are appropriately implemented.

Preferably, in the control apparatus 20, the detection range 50 of the surrounding environment sensor 14 that is used in the specifying processing is determined based on the expected traveling locus 40 of the leaning vehicle 1, and the specifying section 23 changes the expected traveling locus 40 based on the speed information. Accordingly, as in the abovementioned third processing, even in a case where the handle operation in order to balance the leaning vehicle 1 has been performed by the rider, the situation where the target vehicle is positioned within the detection range 50 while the target vehicle does not deviate from the detection range 50 is maintained. Therefore, it is possible to appropriately specify the target vehicle, and appropriately execute the speed control.

Preferably, in the control apparatus 20, if the speed information is information indicating that the leaning vehicle 1 performs low-speed traveling in which the leaning vehicle 1 travels at a speed lower than a reference speed or information indicating that the leaning vehicle 1 is in a change process to the low-speed traveling, the specifying section 23 suppresses the variation in the expected traveling locus 40 in the vehicle width direction of the leaning vehicle 1. Accordingly, as in the abovementioned third processing, even in a case where the handle operation in order to balance the leaning vehicle 1 has been performed by the rider, maintaining the situation where the target vehicle is positioned within the detection range 50 while the target vehicle does not deviate from the detection range 50 is appropriately implemented. Therefore, appropriately specifying the target vehicle and appropriately executing the speed control are appropriately implemented.

Preferably, in the control apparatus 20, the speed information is information indicating the speed of the leaning vehicle 1. Accordingly, it is possible to appropriately determine whether the leaning vehicle 1 performs the low-speed traveling or the leaning vehicle 1 is in a change process to the low-speed traveling, by paying attention to the speed of the leaning vehicle 1.

Preferably, in the control apparatus 20, the speed information is information indicating the deceleration of the leaning vehicle 1. Accordingly, it is possible to appropriately determine whether the leaning vehicle 1 performs the low-speed traveling or the leaning vehicle 1 is in a change process to the low-speed traveling, by paying attention to the deceleration of the leaning vehicle 1.

Preferably, in the control apparatus 20, the speed information is information related to the brake operation by the rider of the leaning vehicle 1. Accordingly, it is possible to appropriately determine whether the leaning vehicle 1 performs the low-speed traveling or the leaning vehicle 1 is in a change process to the low-speed traveling, by paying attention to the brake operation by the rider.

The invention is not limited the description of the embodiment. For example, only a part of the embodiment may be executed. For example, the speed information that is used in each of the first processing, the second processing, and the third processing described above is not specially limited. Specifically, in each of the first processing, the second processing, and the third processing described above, as speed information, information indicating the speed of the leaning vehicle 1 may be used, information indicating the deceleration of the leaning vehicle 1 may be used, and information related to the brake operation by the rider of the leaning vehicle 1 may be used. Moreover, in each of the first processing, the second processing, and the third processing described above, as speed information, among information indicating the speed of the leaning vehicle 1, information indicating the deceleration of the leaning vehicle 1, and information related to the brake operation by the rider of the leaning vehicle 1, several types of the information may be used.

### Reference Signs List

- 1:: Leaning vehicle
- 2:: Front wheel
- 3:: Rear wheel
- 4:: Handle
- 11:: Engine
- 12:: Hydraulic pressure control unit
- 13:: Input apparatus
- 14:: Surrounding environment sensor
- 15:: Inertial measurement apparatus
- 16:: Front-wheel wheel speed sensor
- 17:: Rear wheel wheel speed sensor
- 20:: Control apparatus
- 21:: Acquiring section
- 22:: Executing section
- 23:: Specifying section
- 30:: Preceding vehicle
- 40:: Expected traveling locus
- 50:: Detection range
- D1:: First width
- D2:: Second width
- D3:: Width
- D4:: Width

## Claims

1. A control apparatus (20) that controls a behavior of a leaning vehicle (1), the control apparatus comprising:
an executing section (22) that executes speed control in which a speed of the leaning vehicle (1) is controlled based on positional relation information between the leaning vehicle (1) and a target vehicle; and
a specifying section (23) that executes specifying processing in which the target vehicle is specified based on a detection result by a surrounding environment sensor (14) mounted to the leaning vehicle (1),
**characterized in that** the specifying section (23) changes the specifying processing based on speed information on the leaning vehicle (1).

2. The control apparatus according to claim 1, wherein the surrounding environment sensor (14) rotates integrally with a handle (4) of the leaning vehicle (1).

3. The control apparatus according to claim 1 or 2, wherein the specifying section (23) determines propriety of changing the target vehicle in accordance with the speed information.

4. The control apparatus according to claim 3, wherein the specifying section (23) forbids changing the target vehicle when the speed information is information indicating that the leaning vehicle (1) performs low-speed traveling in which the leaning vehicle (1) travels at a speed lower than a reference speed or information indicating that the leaning vehicle (1) is in a change process to the low-speed traveling.

5. The control apparatus according to claim 1 or 2, wherein the specifying section (23) changes a detection range (50) of the surrounding environment sensor (14) that is used in the specifying processing, based on the speed information.

6. The control apparatus according to claim 5, wherein the specifying section (23) expands the detection range (50) when the speed information is information indicating that the leaning vehicle (1) performs low-speed traveling in which the leaning vehicle (1) travels at a speed lower than a reference speed or information indicating that the leaning vehicle (1) is in a change process to the low-speed traveling more than that when the speed information is not the information indicating that the leaning vehicle (1) performs the low-speed traveling or indicating that the leaning vehicle (1) is in the change process to the low-speed traveling.

7. The control apparatus according to claim 1 or 2, wherein
a detection range (50) of the surrounding environment sensor (14) that is used in the specifying processing is determined based on an expected traveling locus (40) of the leaning vehicle (1), and
the specifying section (23) changes the expected traveling locus (40) based on the speed information.

8. The control apparatus according to claim 7, wherein the specifying section (23) suppresses a variation in the expected traveling locus (40) in a vehicle width direction of the leaning vehicle (1) when the speed information is information indicating that the leaning vehicle (1) performs low-speed traveling in which the leaning vehicle (1) travels at a speed lower than a reference speed or information indicating that the leaning vehicle (1) is in a change process to the low-speed traveling.

9. The control apparatus according to claim 1 or 2, wherein the speed information is information indicating a speed of the leaning vehicle (1).

10. The control apparatus according to claim 1 or 2, wherein the speed information is information indicating a deceleration of the leaning vehicle (1).

11. The control apparatus according to claim 1 or 2, wherein the speed information is information related to a brake operation by a rider of the leaning vehicle (1).

12. A control method of controlling a behavior of a leaning vehicle (1), the control method comprising:
executing speed control in which a speed of the leaning vehicle (1) is controlled based on positional relation information between the leaning vehicle (1) and a target vehicle, by an executing section (22) of a control apparatus (20); and
executing a specifying processing in which the target vehicle is specified based on a detection result by a surrounding environment sensor (14) mounted to the leaning vehicle (1), by a specifying section (23) of the control apparatus (20),
**characterized in that** the specifying section (23) changes the specifying processing based on speed information on the leaning vehicle (1).

## Patentansprüche

1. Steuereinrichtung (20), die ein Verhalten eines einspurigen Fahrzeugs (1) steuert, wobei die Steuereinrichtung Folgendes umfasst:
einen ausführenden Abschnitt (22), der die Geschwindigkeitsregelung ausführt, in dem eine Geschwindigkeit des einspurigen Fahrzeugs (1) basierend auf Positionsbeziehungsinformationen zwischen dem einspurigen Fahrzeug (1) und einem Zielfahrzeug gesteuert wird, und
einen spezifizierenden Abschnitt (23), der die Spezifikationsverarbeitung durchführt, bei der das Zielfahrzeug basierend auf einem Detektionsergebnis durch einen am einspurigen Fahrzeug (1) montierten Umgebungssensor (14) spezifiziert wird,
**dadurch gekennzeichnet, dass** der spezifizierende Abschnitt (23) die Spezifikationsverarbeitung basierend auf Geschwindigkeitsinformationen am einspurigen Fahrzeug (1) ändert.

2. Steuervorrichtung nach Anspruch 1, wobei der Umgebungssensor (14) integral mit einem Griff (4) des einspurigen Fahrzeugs (1) rotiert.

3. Steuervorrichtung nach Anspruch 1 oder 2, wobei der spezifizierende Abschnitt (23) die Berechtigung des Änderns des Zielfahrzeugs gemäß den Geschwindigkeitsinformationen bestimmt.

4. Steuervorrichtung nach Anspruch 3, wobei der spezifizierende Abschnitt (23) das Ändern des Zielfahrzeugs verbietet, wenn die Geschwindigkeitsinformationen Informationen sind, die anzeigen, dass das einspurige Fahrzeug (1) langsames Fahren durchführt, bei dem das einspurige Fahrzeug (1) mit einer Geschwindigkeit fährt, die niedriger als eine Referenzgeschwindigkeit ist, oder Informationen, die anzeigen, dass sich das einspurige Fahrzeug (1) in einem Änderungsprozess zu dem langsamen Fahren befindet.

5. Steuervorrichtung nach Anspruch 1 oder 2, wobei der spezifizierende Abschnitt (23) einen Detektionsbereich (50) des Umgebungssensors (14) ändert, der bei der Spezifikationsverarbeitung verwendet wird, basierend auf den Geschwindigkeitsinformationen.

6. Steuervorrichtung nach Anspruch 5, wobei der spezifizierende Abschnitt (23) den Detektionsbereich (50) erweitert, wenn die Geschwindigkeitsinformationen Informationen sind, die anzeigen, dass das einspurige Fahrzeug (1) langsames Fahren durchführt, bei dem das einspurige Fahrzeug (1) mit einer Geschwindigkeit fährt, die niedriger ist als eine Referenzgeschwindigkeit, oder Informationen sind, die anzeigen, dass das einspurige Fahrzeug (1) sich in einem Änderungsprozess zu dem langsamen Fahren befindet, und darüber hinaus, wenn die Geschwindigkeitsinformationen nicht die Informationen sind, die anzeigen, dass das einspurige Fahrzeug (1) das langsame Fahren durchführt, oder anzeigen, dass das einspurige Fahrzeug (1) sich in einem Änderungsprozess zu dem langsamen Fahren befindet.

7. Steuereinrichtung nach Anspruch 1 oder 2, wobei ein Detektionsbereich (50) des Umgebungssensors (14), der bei der Spezifizierung verwendet wird, basierend auf einem erwarteten Fahrziel (40) des einspurigen Fahrzeugs (1) bestimmt wird, und
der spezifizierende Abschnitt (23) das erwartete Fahrziel (40) basierend auf den Geschwindigkeitsinformationen ändert.

8. Steuereinrichtung nach Anspruch 7, wobei der spezifizierende Abschnitt (23) eine Veränderung des erwarteten Fahrziels (40) in einer Fahrzeugbreitenrichtung des einspurigen Fahrzeugs (1) unterdrückt, wenn die Geschwindigkeitsinformationen Informationen sind, die anzeigen, dass das einspurige Fahrzeug (1) langsames Fahren durchführt, bei dem das einspurige Fahrzeug (1) mit einer Geschwindigkeit fährt, die niedriger als eine Referenzgeschwindigkeit ist, oder Informationen, die anzeigen, dass sich das einspurige Fahrzeug (1) in einem Änderungsprozess zu dem langsamen Fahren befindet.

9. Steuereinrichtung nach Anspruch 1 oder 2, wobei die Geschwindigkeitsinformationen Informationen sind, die eine Geschwindigkeit des einspurigen Fahrzeugs (1) anzeigen.

10. Steuereinrichtung nach Anspruch 1 oder 2, wobei die Geschwindigkeitsinformationen Informationen sind, die eine Verlangsamung des einspurigen Fahrzeugs (1) anzeigen.

11. Steuereinrichtung nach Anspruch 1 oder 2, wobei die Geschwindigkeitsinformationen Informationen sind, die sich auf eine Bremsbetätigung durch einen Fahrer des einspurigen Fahrzeugs (1) beziehen.

12. Steuerverfahren zum Steuern eines Verhaltens eines einspurigen Fahrzeugs (1), wobei das Steuerverfahren Folgendes umfasst:
Durchführen der Geschwindigkeitsregelung, bei der eine Geschwindigkeit des einspurigen Fahrzeugs (1) basierend auf Positionsbeziehungsinformationen zwischen dem einspurigen Fahrzeug (1) und einem Zielfahrzeug durch einen ausführenden Abschnitt (22) einer Steuereinrichtung (20) gesteuert wird, und
Durchführen einer Spezifikationsverarbeitung, bei der das Zielfahrzeug basierend auf einem Detektionsergebnis durch einen am einspurigen Fahrzeug (1) angebrachten Umgebungssensor (14) und einen spezifizierenden Abschnitt (23) der Steuereinrichtung (20) spezifiziert wird,
**dadurch gekennzeichnet, dass** der spezifizierende Abschnitt (23) die Spezifikationsverarbeitung basierend auf Geschwindigkeitsinformationen am einspurigen Fahrzeug (1) ändert.

## Revendications

1. Appareil de commande (20) qui commande un comportement d'un véhicule inclinable (1), l'appareil de commande comprenant :
une unité d'exécution (22) qui exécute une commande de vitesse dans laquelle une vitesse du véhicule inclinable (1) est commandée sur la base d'informations de relation de position entre le véhicule inclinable (1) et un véhicule cible ; et
une unité de spécification (23) qui exécute un traitement de spécification dans lequel le véhicule cible est spécifié sur la base d'un résultat de détection par un capteur d'environnement alentour (14) monté sur le véhicule inclinable (1),
**caractérisé en ce que** l'unité de spécification (23) modifie le traitement de spécification sur la base d'informations de vitesse concernant le véhicule inclinable (1).

2. Appareil de commande selon la revendication 1, dans lequel le capteur d'environnement alentour (14) est solidaire en rotation d'un guidon (4) du véhicule inclinable (1).

3. Appareil de commande selon la revendication 1 ou 2, dans lequel l'unité de spécification (23) détermine la pertinence d'un changement du véhicule cible conformément aux informations de vitesse.

4. Appareil de commande selon la revendication 3, dans lequel l'unité de spécification (23) interdit le changement du véhicule cible lorsque les informations de vitesse sont des informations indiquant que le véhicule inclinable (1) effectue un déplacement à faible vitesse dans lequel le véhicule inclinable (1) se déplace à une vitesse inférieure à une vitesse de référence ou des informations indiquant que le véhicule inclinable (1) est en transition vers le déplacement à faible vitesse.

5. Appareil de commande selon la revendication 1 ou 2, dans lequel l'unité de spécification (23) modifie une plage de détection (50) du capteur d'environnement alentour (14) qui est utilisée dans le traitement de spécification, sur la base des informations de vitesse.

6. Appareil de commande selon la revendication 5, dans lequel l'unité de spécification (23) élargit la plage de détection (50) lorsque les informations de vitesse sont des informations indiquant que le véhicule inclinable (1) effectue un déplacement à faible vitesse dans lequel le véhicule inclinable (1) se déplace à une vitesse inférieure à une vitesse de référence ou des informations indiquant que le véhicule inclinable (1) est en transition vers le déplacement à faible vitesse davantage que lorsque les informations de vitesse ne sont pas les informations indiquant que le véhicule inclinable (1) effectue le déplacement à faible vitesse ou indiquant que le véhicule inclinable (1) est en transition vers le déplacement à faible vitesse.

7. Appareil de commande selon la revendication 1 ou 2, dans lequel
une plage de détection (50) du capteur d'environnement alentour (14) utilisée dans le traitement de spécification est déterminée sur la base d'une trajectoire de déplacement attendue (40) du véhicule inclinable (1), et
l'unité de spécification (23) modifie la trajectoire de déplacement attendue (40) sur la base des informations de vitesse.

8. Appareil de commande selon la revendication 7, dans lequel l'unité de spécification (23) supprime une variation de la trajectoire de déplacement attendue (40) dans une direction de largeur de véhicule du véhicule inclinable (1) lorsque les informations de vitesse sont des informations indiquant que le véhicule inclinable (1) effectue un déplacement à faible vitesse dans lequel le véhicule inclinable (1) se déplace à une vitesse inférieure à une vitesse de référence ou des informations indiquant que le véhicule inclinable (1) est en transition vers le déplacement à faible vitesse.

9. Appareil de commande selon la revendication 1 ou 2, dans lequel les informations de vitesse sont des informations indiquant une vitesse du véhicule inclinable (1).

10. Appareil de commande selon la revendication 1 ou 2, dans lequel les informations de vitesse sont des informations indiquant une décélération du véhicule inclinable (1).

11. Appareil de commande selon la revendication 1 ou 2, dans lequel les informations de vitesse sont des informations relatives à une opération de freinage par un conducteur du véhicule inclinable (1).

12. Procédé de commande destiné à commander un comportement d'un véhicule inclinable (1), le procédé de commande comprenant :
l'exécution d'une commande de vitesse dans laquelle une vitesse du véhicule inclinable (1) est commandée sur la base d'informations de relation de position entre le véhicule inclinable (1) et un véhicule cible, par une unité d'exécution (22) d'un appareil de commande (20) ; et
l'exécution d'un traitement de spécification dans lequel le véhicule cible est spécifié sur la base d'un résultat de détection par un capteur d'environnement alentour (14) monté sur le véhicule inclinable (1), par une unité de spécification (23) de l'appareil de commande (20),
**caractérisé en ce que** l'unité de spécification (23) modifie le traitement de spécification sur la base d'informations de vitesse concernant le véhicule inclinable (1).
